(19) Europäisches Patentamt / European Patent Office / Office européen des brevets

(11) **EP 2 769 209 B1**

(12) **FASCICULE DE BREVET EUROPEEN**

(45) Date de publication et mention de la délivrance du brevet:
**02.01.2019 Bulletin 2019/01**

(21) Numéro de dépôt: **12798842.6**

(22) Date de dépôt: **19.10.2012**

(51) Int Cl.:
*G01N 23/203* (2006.01)    *G01V 5/00* (2006.01)

(86) Numéro de dépôt international:
**PCT/IB2012/055752**

(87) Numéro de publication internationale:
**WO 2013/057716 (25.04.2013 Gazette 2013/17)**

(54) **PROCÉDÉ ET APPAREIL DE CARACTÉRISATION D'UN MATERIAU PAR DIFFUSION D'UN RAYONNEMENT ÉLECTROMAGNÉTIQUE**

VERFAHREN UND VORRICHTUNG ZUR CHARAKTERISIERUNG EINES MATERIALS DURCH STREUUNG EINER ELEKTROMAGNETISCHEN STRAHLUNG

METHOD AND DEVICE FOR CHARACTERISING A MATERIAL BY ELECTROMAGNETIC RADIATION SCATTERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.10.2011 FR 1103248**

(43) Date de publication de la demande:
**27.08.2014 Bulletin 2014/35**

(73) Titulaire: **Commissariat à l'Énergie Atomique et aux Énergies Alternatives 75015 Paris (FR)**

(72) Inventeurs:
• **PAULUS, Caroline**
  **F-38000 Grenoble (FR)**
• **TABARY, Joachim**
  **F-38100 Grenoble (FR)**

(74) Mandataire: **Gevers & Orès
41 avenue de Friedland
75008 Paris (FR)**

(56) Documents cités:
**WO-A1-2011/009833**

• WEI LI ET AL: "Partial least-squares regression for identification of liquid materials", PROCEDIA ENGINEERING, vol. 7, 1 janvier 2010 (2010-01-01), pages 130-134, XP055025646, ISSN: 1877-7058, DOI: 10.1016/j.proeng.2010.11.019
• VÉRONIQUE REBUFFEL ET AL: "New Perspectives of X-ray Techniques for Explosive Detection Based on CdTe/CdZnTe Spectrometric Detectors", INTERNATIONAL SYMPOSIUM ON DIGITAL INDUSTRIAL RADIOLOGY AND COMPUTED TOMOGRAPHY, vol. 8, 22 juin 2011 (2011-06-22), page 1, XP055025669, Berlin, Germany
• R. D. LUGGAR ET AL: "Multivariate analysis of statistically poor EDXRD spectra for the detection of concealed explosives", X-RAY SPECTROMETRY, vol. 27, no. 2, 1 mars 1998 (1998-03-01), pages 87-94, XP055025645, ISSN: 0049-8246, DOI: 10.1002/(SICI)1097-4539(199803/04)27:2<87: :AID-XRS256>3.0.CO;2-0

**EP 2 769 209 B1**

**Description**

L'invention porte sur un procédé de caractérisation d'un matériau, et notamment d'un matériau organique, par diffusion d'un rayonnement électromagnétique, et notamment de rayons X. L'invention porte également sur un appareil pour la mise en oeuvre d'un tel procédé.

La caractérisation peut comporter l'identification du matériau à l'intérieur d'une base de données, ou simplement la détermination d'une ou plusieurs de ses propriétés physiques ou physico-chimiques, telles que la densité.

L'invention s'applique principalement à la caractérisation de matériaux « légers », et notamment organiques. On entend par « matériaux légers » les matériaux constitués à 90% en masse ou plus par des atomes de nombre atomique inférieur ou égal à 10, et par « matériaux organiques » les matériaux constitués à 90% en masse ou plus par du carbone ou des composés carbonés. L'invention s'applique en particulier aux matériaux dits « CHON », constitués exclusivement ou presque exclusivement (à 95% en masse ou plus) de carbone (C), hydrogène (H), oxygène (O), azote (N), ou aux matériaux organiques légers fluorés, comportant ces mêmes éléments plus le fluor.

L'invention peut utiliser tout rayonnement électromagnétique présentant une énergie (photonique) suffisamment élevée, c'est-à-dire supérieure ou égale à 1 keV (kiloélectronvolt ; 1 keV=1,602×10$^{-16}$ J), de préférence supérieure ou égale à 10 keV et de manière encore préférée comprise entre 10 keV et 300 keV. Typiquement, il pourra s'agir de rayons X, générés notamment par un tube à rayons X.

Le document WO 2011/009833 décrit un procédé d'identification d'un matériau par diffusion de rayons X. Conformément à ce procédé, un faisceau collimaté polychromatique (ou polyénergétique, les deux termes étant synonymes) de rayons X est dirigé vers un échantillon en un matériau à identifier. Une partie des rayons X incidents subit une diffusion de Compton à l'intérieur du matériau, et les photons diffusés selon un angle de diffusion $\theta$ prédéfini sont détectés par un capteur spectrométrique. Le faisceau incident, collimaté, et le cône d'acceptation du capteur, qui est étroit (quelques degrés) définissent un volume élémentaire à l'intérieur de l'échantillon, d'où proviennent tous les photons détectés. La source du faisceau de rayons X et le capteur spectrométrique sont déplacés perpendiculairement à une surface de l'échantillon en maintenant constante leur orientation ; de cette façon, on fait varier la profondeur dudit volume élémentaire par rapport à ladite surface de l'échantillon ; un spectre de rayons X diffusés est acquis pour chaque dite profondeur. La connaissance de deux spectres correspondant à des profondeurs différentes permet de calculer, de manière directe, deux paramètres, fonctions de l'énergie des photons diffusés, $\mu'$ et $\beta$.

Il a été montré que, pour une énergie donnée et pour un grand nombre de matériaux connus, $\mu'$ est approximativement proportionnel à la densité du matériau. Cela permet d'estimer la densité $\rho$ - inconnue - du matériau à caractériser, à partir de la valeur de $\mu'$ moyennée sur une plage d'énergie prédéfinie. D'autre part, la connaissance de ladite densité $\rho$ et du paramètre $\beta$ permet de déterminer le rapport $Z_{eff}/A_{norm}$, où $Z_{eff}$ est le nombre atomique effectif d'un matériau (une grandeur qui caractérise son interaction avec les rayons X) et $A_{norm}$ sa masse molaire normalisée. Ainsi, le matériau peut être représenté par un point dans un plan $\rho/(Z_{eff}/A_{norm})$, dont les coordonnées sont déterminées à partir d'au moins deux spectres de rayons X diffusés. Cela permet l'identification du matériau.

L'invention vise à fournir une alternative à cette méthode, en permettant une caractérisation plus précise du matériau grâce à une meilleure exploitation de l'information contenue dans les spectres de diffusion.

Conformément à l'invention, un tel but est atteint par un procédé de caractérisation d'un matériau comportant les étapes consistant à :

a. diriger un premier faisceau collimaté de rayonnement électromagnétique, d'énergie supérieure ou égale à 1keV, vers un échantillon du matériau à caractériser ;

b. acquérir le spectre d'un deuxième faisceau de rayonnement électromagnétique, obtenu par diffusion dudit premier faisceau par un volume élémentaire dudit échantillon selon un angle de diffusion $\theta$ prédéfini ;

lesdites étapes a et b étant répétées une ou plusieurs fois, en modifiant à chaque fois les longueurs des trajets du premier et du deuxième faisceau à l'intérieur dudit matériau, tout en maintenant sensiblement constant leur rapport $\varepsilon$ ainsi que ledit angle de diffusion $\theta$ ; et

c. estimer plusieurs propriétés caractéristiques dudit matériau à partir des spectres acquis lors des répétitions de l'étape b ;

caractérisé en ce que ladite étape c est mise en oeuvre au de deux modèles multivariables et comporte:

- le calcul, à partir des spectres acquis lors des répétitions de ladite étape b, d'une fonction d'atténuation linéique combinée $\mu'$ du matériau, définie comme une moyenne pondérée des coefficients d'atténuation linéiques $\mu$ du matériau pour le rayonnement électromagnétique incident à une énergie $E_0$ et pour le rayonnement électromagnétique diffusé à une énergie $E_1$, où $E_0$ représente l'énergie d'un photon incident et $E_1$ celle d'un photon ayant subi une diffusion selon ledit angle de diffusion $\theta$, les coefficients de pondération de ladite moyenne dépendant dudit rapport $\varepsilon$, ladite atténuation linéique combinée étant exprimée en fonction d'une énergie choisie parmi $E_0$ et $E_1$,

- l'estimation de la densité dudit matériau à partir des valeurs de ladite fonction d'atténuation linéique combinée pour une pluralité de valeurs d'énergie, par application d'un premier modèle multivariable. Dans le procédé connu de l'art antérieur, par contre, la densité $\rho$ du matériau est simplement considérée proportionnelle à la valeur moyenne de $\mu$' ; l'opération de moyenne entraine une perte d'information qui, dans le procédé de l'invention, est évitée grâce à l'utilisation d'un modèle multivariable.

Selon l'invention, l'étape c comporte également : la détermination d'une fonction $D\mu$' représentative d'une comparaison entre des valeurs prises par ladite fonction d'atténuation linéique combinée $\mu$' pour des valeurs d'énergie présentant un écart dE constant ; et l'estimation d'un nombre atomique effectif massique dudit matériau à partir des valeurs de ladite fonction $D\mu$' pour une pluralité de valeurs d'énergie, par application d'un second modèle multivariable. Là encore, l'utilisation d'un modèle multivariable permet d'éviter la perte d'information inhérente au procédé de l'art antérieur.

- Le procédé peut comporter également une étape d d'identification dudit matériau à partir des valeurs estimées de sa densité et de son nombre atomique effectif massique.
- Les modèles multivariables peuvent être basés sur une régression par moindres carrés partiels, ou PLS.
- Lesdites étapes a et b peuvent être répétées une ou plusieurs fois, en modifiant à chaque fois la profondeur dudit volume élémentaire de l'échantillon par rapport à une surface d'incidence dudit faisceau collimaté de rayonnement électromagnétique. En particulier, ladite profondeur dudit volume élémentaire de l'échantillon peut être modifiée par translation rigide d'une source et d'un capteur spectrométrique de rayonnement électromagnétique par rapport audit échantillon, dans une direction perpendiculaire à ladite surface d'incidence.
- Ledit matériau peut être un matériau organique.
- Ledit premier faisceau collimaté de rayonnement électromagnétique peut être polychromatique et présenter un spectre d'énergie s'étendant sur au moins 10 keV dans une région comprise entre 10 keV et 300 keV.

Un autre objet de l'invention est un appareil de caractérisation d'un matériau comportant : une source collimatée de rayonnement électromagnétique, agencée pour diriger un premier faisceau collimaté de rayonnement électromagnétique vers un échantillon du matériau à caractériser ; un capteur spectrométrique de rayonnement électromagnétique, agencé pour acquérir le spectre d'un deuxième faisceau de rayonnement électromagnétique, obtenu par diffusion dudit premier faisceau par un volume élémentaire dudit échantillon selon un angle de diffusion prédéfini ; un système d'actionnement, agencé pour modifier la position relative de ladite source et dudit capteur spectrométrique par rapport audit échantillon de manière à modifier les longueurs des trajets du premier et du deuxième faisceau à l'intérieur dudit matériau, tout en maintenant sensiblement constant leur rapport $\varepsilon$ ainsi que ledit angle de diffusion $\theta$ ; et un moyen de traitement de l'information, configuré ou programmé pour estimer une ou plusieurs propriétés caractéristiques dudit matériau à partir d'une pluralité de spectres acquis par ledit capteur spectrométrique pour différentes valeurs desdites longueurs des trajets du premier et du deuxième faisceau à l'intérieur dudit matériau ;
caractérisé en ce que ledit moyen de traitement de l'information est configuré ou programmé pour estimer plusieurs propriétés caractéristiques dudit matériau au moyen de deux modèles multivariables.
Selon l'invention

- Ledit moyen de traitement de l'information est configuré ou programmé pour calculer, à partir des spectres acquis lors des répétitions de ladite étape b, une fonction d'atténuation linéique combinée $\mu$' du matériau, définie comme une moyenne pondérée des coefficients d'atténuation linéiques $\mu$ du matériau pour le rayonnement électromagnétique incident à une énergie $E_0$ et pour le rayonnement électromagnétique diffusé à une énergie $E_1$, où $E_0$ représente l'énergie d'un photon incident et $E_1$ celle d'un photon ayant subi une diffusion selon ledit angle de diffusion $\theta$, les coefficients de pondération de ladite moyenne dépendant dudit rapport $\varepsilon$, ladite atténuation linéique combinée étant exprimée en fonction d'une énergie choisie parmi $E_0$ et $E_1$.
- Ledit moyen de traitement de l'information est configuré ou programmé pour estimer la densité dudit matériau à partir des valeurs de ladite fonction d'atténuation linéique combinée pour une pluralité de valeurs d'énergie, par application d'un premier modèle multivariable.
- Ledit moyen de traitement de l'information est configuré ou programmé pour : déterminer une fonction $D\mu$' représentative d'une comparaison entre des valeurs prises par ladite fonction d'atténuation linéique combinée $\mu$' pour des valeurs d'énergie présentant un écart dE constant ; et estimer un nombre atomique effectif massique dudit matériau à partir des valeurs de ladite fonction $D\mu$' pour une pluralité de valeurs d'énergie, par application d'un second modèle multivariable.
- Ledit moyen de traitement de l'information peut être configuré ou programmé pour identifier ledit matériau à partir des valeurs estimées de sa densité et de son nombre atomique effectif massique.
- Les modèles multivariables peuvent être basés sur une régression par moindres carrés partiels, ou PLS.

- Ledit système d'actionnement peut être adapté pour modifier la profondeur dudit volume élémentaire de l'échantillon par rapport à une surface d'incidence dudit faisceau collimaté de rayonnement électromagnétique en translatant rigidement ladite source et ledit capteur spectrométrique par rapport audit échantillon, dans une direction perpendiculaire à ladite surface d'incidence.

- Ladite source collimatée de rayonnement électromagnétique peut être polychromatique et présente un spectre d'énergie s'étendant sur au moins 10 keV dans une région comprise entre 10 keV et 300 keV.

D'autres caractéristiques, détails et avantages de l'invention ressortiront à la lecture de la description faite en référence aux dessins annexés donnés à titre d'exemple, dans lesquels:

- La figure 1 représente, de manière schématique, un appareil selon un mode de réalisation de l'invention ;
- La figure 2 montre deux spectres de diffusion de rayons X, correspondant à deux profondeurs différentes du volume élémentaire du matériau d'où proviennent les photons diffusés détectés ;
- La figure 3 montre comment différents matériaux peuvent être représentés par des points dans un plan $\rho/Z_{effm}$, où $\rho$ est la densité et $Z_{effm}$ le nombre atomique effectif massique ;
- Les figures 4A et 4B illustrent les relations empiriques existant entre $\mu'$ et la densité $\rho$, et entre $D\mu$ et le nombre atomique effectif massique $Z_{effm}$ pour un ensemble de matériaux ;
- La figure 5 est un schéma décrivant un procédé d'identification d'un matériau selon un mode de réalisation de l'invention ; et
- Les graphiques des figures 6A - 6E illustrent un exemple d'application du procédé et du dispositif de l'invention à l'identification d'un matériau.

Dans toute la description qui suit, il sera fait référence au cas où le rayonnement électromagnétique est un rayonnement X.

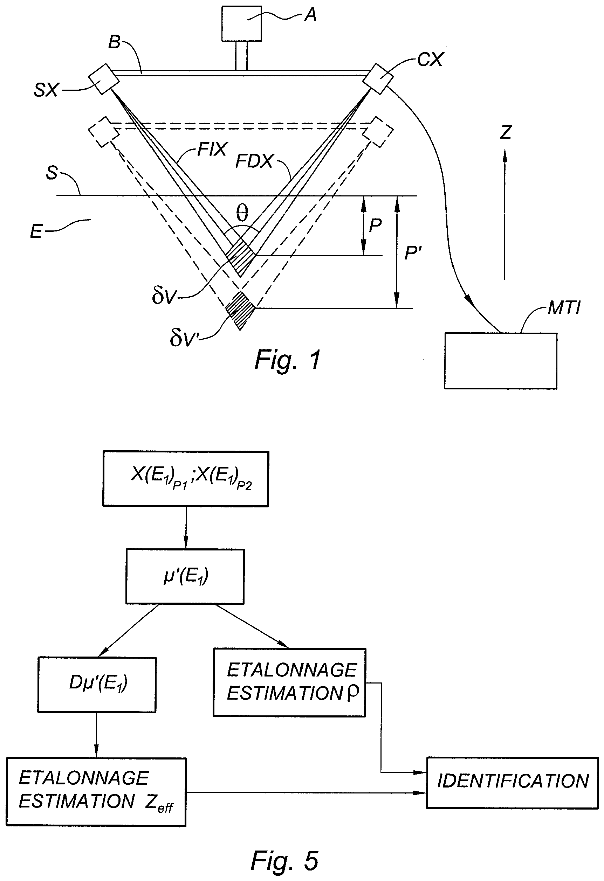

L'appareil illustré sur la figure 1 comprend principalement une source SX de rayons X, un capteur spectrométrique de rayons X, CX, un bâti B reliant la source et le capteur, un moyen d'actionnement A pour translater ledit bâti dans une direction Z et un moyen de traitement de l'information MTI pour recevoir et traiter des signaux issus du capteur CX. Ce moyen de traitement de l'information peut être un ordinateur programmé de manière opportune, une carte électronique comprenant un processeur - généraliste ou spécialisé pour le traitement numérique des signaux - programmé de manière opportune, voire même un circuit électronique numérique configuré de manière opportune.

La source SX est polychromatique (ou polyénergétique) et collimatée, et émet dans la plage 10 keV et 300 keV. Il peut s'agir d'un tube à rayons X conventionnel équipé d'un système de collimation ; elle émet un faisceau de rayons X, FIX, en direction d'un échantillon E du matériau à caractériser. La divergence du faisceau (angle au sommet du cône formé par les rayons X) est typiquement inférieure ou égale à 10°.

Le capteur CX peut être un détecteur semi-conducteur de type CdTe ou CdZnTe équipé d'un système de collimation qui définit un cône d'acceptation FDX dont la largeur angulaire (angle au sommet) est typiquement inférieure ou égale à 10°. Les axes du faisceau FIX, incident sur l'échantillon, et du cône d'acceptation FDX forment entre eux un angle $\theta$ ; leur intersection définit un volume élémentaire $\delta V$ qui se trouve à une profondeur P au-dessous d'une surface S de l'échantillon.

Les photons X générés par la source SX pénètrent dans l'échantillon par la surface S, puis subissent des phénomènes de diffusion - principalement de type Compton - et d'absorption. Il est immédiat de vérifier que, si on néglige les diffusions multiples, seuls les photons qui sont diffusés à l'intérieur du volume élémentaire $\delta V$ selon un angle de diffusion approximativement égal à $\theta$ peuvent atteindre le capteur spectrométrique $\theta$ et être détectés.

La source SX et le capteur CX sont montés, avec une orientation réglable, sur le bâti B. Un moyen d'actionnement A, tel qu'un moteur électrique linéaire, permet de translater ledit bâti dans la direction Z, perpendiculaire à la surface S de l'échantillon - ou inversement de translater ledit échantillon dans la même direction. L'effet de cette translation est de modifier la profondeur P' du volume élémentaire de diffusion, $\delta V'$. Sur la figure, le bâti translaté avec sa source et son capteur, ainsi que le volume élémentaire $\delta V'$ sont représentés en trait haché.

Soit $\Phi(E_0)$ le débit de fluence - inconnu - de la source SX à l'énergie $E_0$. Le flux de photons diffusés qui atteint le capteur CX est donné par :

$$X(E_1) = \Phi(E_0).e^{-\mu(E_0).l_1}.\left[\frac{d\sigma_{Kn}(E_0,\theta)}{d\Omega}\delta\omega\frac{N_a.Z_{eff\_a}.\rho}{A_{norm}}.\delta V\right].e^{-\mu(E_1).l_2} \qquad (1)$$

où :

- $E_1 = \dfrac{E_0}{1 + \alpha(1 - \cos\theta)}$ , avec $\alpha = \dfrac{E_0}{m_e c^2}$ , $m_e$ étant la masse de l'électron et c la vitesse de la lumière, est l'énergie après diffusion Compton ;

- $\mu(E_0)$ et $\mu(E_1)$ sont les coefficients d'atténuation linéique du matériau traversé avant et après la diffusion, respectivement ;

- $l_1$ est la longueur du trajet parcouru dans le matériau par les photons avant la diffusion ;

- $l_2$ est la longueur du trajet parcouru dans le matériau par les photons après la diffusion ;

- $\dfrac{d\sigma_{KN}}{d\Omega}(E_0, \theta)$ est la section efficace différentielle de diffusion par électron par effet Compton, donnée par la formule de Klein-Nishina ;

- $\delta\omega$ est l'angle solide sous lequel est vu le détecteur depuis le volume élémentaire de diffusion ;

- $N_a$ est le nombre d'Avogadro ;

- $A_{norm}$ est la masse molaire normalisée du mélange définie par : $A_{norm} = \sum_i \alpha_i^{at} A_i$ , où les facteurs $\alpha_i$ sont les proportions atomiques des différents éléments, indexés par « i », qui constituent le matériau ;

- $Z_{eff\_a}$ est le nombre effectif atomique défini comme $A_{norm}$ par $Z_{eff\_a} = \sum_i \alpha_i^{at} Z_i$ ; et

- $\rho$ est la densité du matériau.

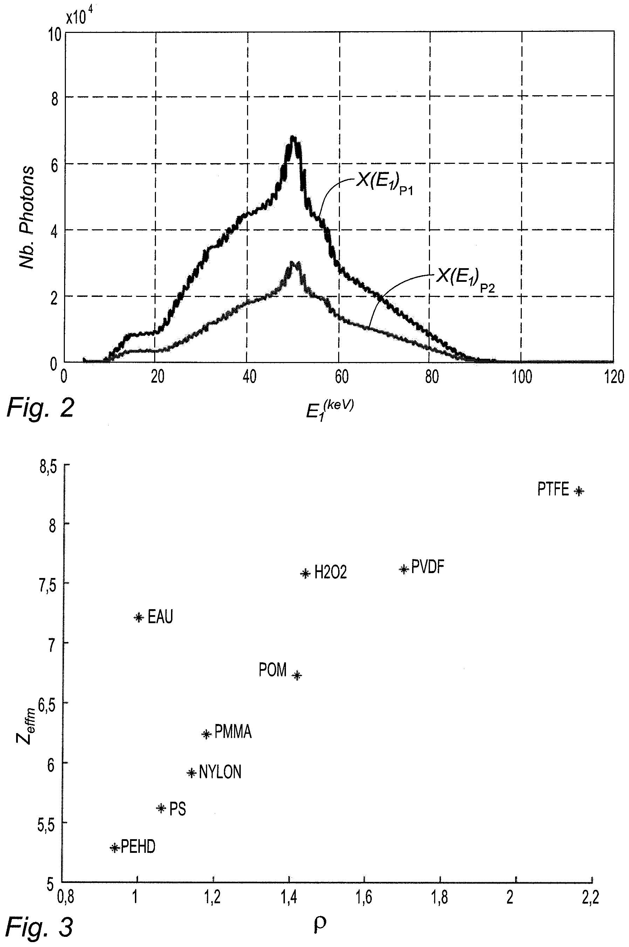

La figure 2 montre les spectres de rayons X diffusés correspondant à deux valeurs différents de la profondeur du volume élémentaire $\delta V$, $X(E_1)_{P1}$ et $X(E_1)_{P2}$.

En rassemblant tous les termes indépendants du matériau dans un seul coefficient noté $K(E_1)$, l'équation (1) se simplifie et devient :

$$X(E_1) = K(E_1). \frac{\rho . Z_{eff\_a}}{A_{norm}} e^{-\mu'(E_1).l_2} \qquad (2)$$

On définit le « facteur d'asymétrie » $\varepsilon = l_2/l_1$ et la fonction d'atténuation linéique combinée $\mu'(E_1) = \mu(E_1) + \varepsilon \cdot \mu(E_0)$. Comme cela sera montré plus loin, cette fonction contient toute l'information nécessaire pour la caractérisation du matériau. En outre, elle peut être estimée simplement. Il suffit pour cela de réaliser deux mesures de spectres de diffusion à deux profondeurs différentes, $X(E_1)_{P1}$ et $X(E_1)_{P2}$, en veillant à maintenir constants tant l'angle $\theta$ que le facteur d'asymétrie $\varepsilon$ ; on peut alors calculer $\mu'(E_1)$ à l'aide de l'équation suivante :

$$\mu'(E_1) = \frac{\ln(\dfrac{X_{P1}(E_1)}{X_{P2}(E_1)})}{l_2(P_1) - l_2(P_2)} = \frac{\ln(\dfrac{X_{P1}(E_1)}{X_{P2}(E_1)})}{\Delta l} \qquad (3)$$

où $l_2(P_1)$ est la longueur du trajet parcouru dans le matériau par les photons après la diffusion lorsque le volume élémentaire de diffusion se trouve à la profondeur $P_1$, et $l_2(P_2)$ est la longueur du trajet parcouru dans le matériau par les photons après la diffusion lorsque le volume élémentaire de diffusion se trouve à la profondeur $P_2$, et où « ln » indique le logarithme népérien ou naturel.

Le déplacement du système entre les deux mesures est connu, de sorte que la différence de marche $\Delta l$ est elle aussi connue.

On peut généraliser le calcul de $\mu'(E_1)$ avec N>2 mesures à N profondeurs. En effet, on note : '

$$\ln(X(E_1)) = \ln(K(E_1). \frac{\rho . Z_{eff\_a}}{A_{norm}}) - \mu'(E_1).l_2 \qquad (4)$$

Ainsi, en mesurant plusieurs spectres $X_1(E_1)$ à plusieurs profondeurs $l_2(P_i)$, avec i=1...N, la courbe d'atténuation

$\mu'(E_1)$ peut alors être obtenue par régression linéaire.

On peut aussi définir le facteur d'asymétrie comme étant défini par $\varepsilon' = I_2/I_1$, on a alors : $\mu'(E_1,\varepsilon') = \varepsilon'\cdot\mu(E_1) + \mu(E_0)$. La différence de marche $\Delta l$ est alors telle que $\Delta l = I_1(P_2) - I_1(P_2)$ où $I_1(P_1)$ et $I_1(P_2)$ sont les longueurs du trajet parcouru par les photons X dans le matériau avant la diffusion, respectivement à la profondeur $P_1$ et $P_2$. Par la suite, on considérera que $\varepsilon = I_1/I_2$.

L'identification d'un matériau peut s'effectuer en estimant deux paramètres caractéristiques, et en représentant le matériau par un point dans un plan dont les deux dimensions correspondent aux dits paramètres. Le choix des paramètres n'est pas complètement arbitraire : ces derniers doivent être choisis de telle manière que deux matériaux différents soient effectivement représentés par des points distincts. Selon un mode de réalisation préféré de l'invention, les deux paramètres permettant l'identification des matériaux peuvent être la densité $\rho$ et le nombre atomique effectif massique $Z_{effm}$. La densité n'appelle pas de commentaires particuliers, il s'agit simplement de la masse par unité de volume du matériau ; le nombre atomique effectif massique est défini par :

$$Z_{effm} = \sum_i \omega_i.Z_i \qquad (5)$$

où $Z_i$ est le nombre atomique du i-ème élément constituant le matériau, et $\omega_i$ sa proportion massique dans le matériau.

La figure 3 montre plusieurs matériaux organiques courants sous la forme de points dans le plan $\rho / Z_{effm}$ : polyéthylène (PHED), polystyrène (PS), nylon, polyméthacrylate de méthyle (PMMA), polyfluorure de vinylidène (PVDF), polyoxyméthylène (POM), eau, peroxyde de dihydrogène (H2O2), polytétrafluoroéthylène (PTFE).

Le choix de ces deux paramètres est avantageux pour deux raisons ; d'une part, comme illustré par la figure 3, ils permettent effectivement de distinguer différents matériaux organiques ; d'autre part, ils sont liés à la fonction d'atténuation linéique combinée $\mu'(E_1)$ par des relations empiriques.

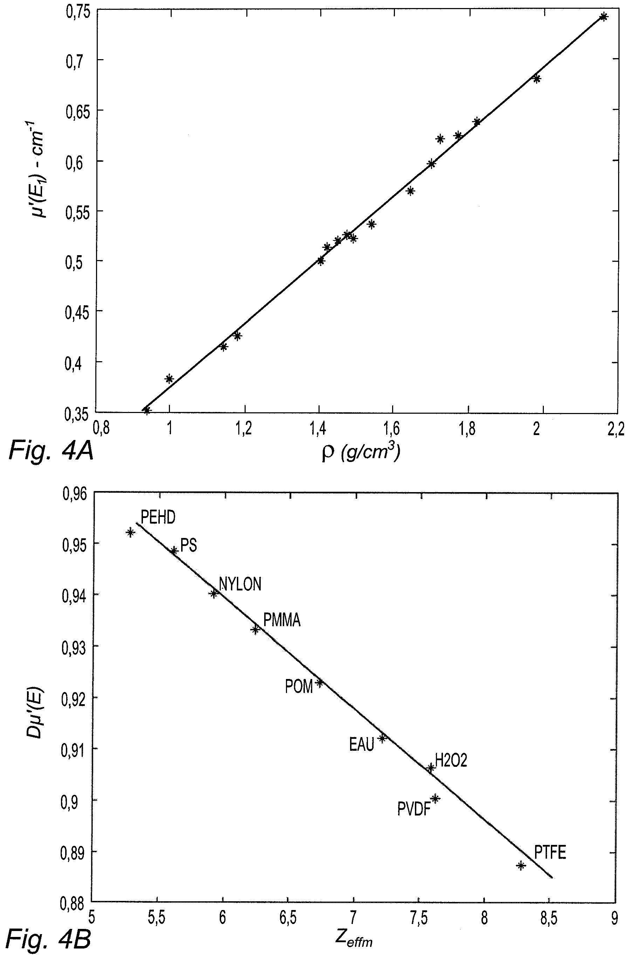

La figure 4A montre la correspondance existant entre la fonction d'atténuation linéique combinée, moyennée entre 50 et 80 keV, et la densité pour un ensemble de matériaux. Chaque point représente l'un des matériaux de la figure 3, et la droite a été obtenue par régression linéaire ; l'écart type de la régression vaut 0,0063626. En effet, dans le procédé du document WO 2011/009833 précité, la densité $\rho$ du matériau à identifier est estimée à partir d'une valeur moyenne de la fonction d'atténuation linéique combinée, calculée sur une plage d'énergie. Cependant, comme cela a été mentionné plus haut, une telle approche ne permet pas une utilisation optimale de l'information contenue dans la fonction $\mu'(E_1)$.

La relation empirique entre le nombre atomique effectif massique $Z_{effm}$ et la fonction d'atténuation linéique combinée est moins directe. Pour la mettre en évidence il faut d'abord définir une fonction $D\mu'$ obtenue à partir de la fonction d'atténuation linéique combinée et définie par :

$$D\mu'(E_1) = \frac{\mu'(E_1+dE)}{\mu'(E_1)} \qquad (6)$$

où dE est un écart ou incrément d'énergie constant, qui- à titre d'exemple non limitatif - peut être égal à 5 keV et plus généralement compris entre 1 et 10 keV.

La figure 4B montre la correspondance existant entre la fonction $D\mu'$, moyennée entre 35 et 45 eV avec dE=5eV, et le nombre atomique effectif massique $Z_{effm}$. Ce qui a été dit plus haut quant à la perte d'information provoquée par l'opération de moyenne en énergie s'applique également à l'estimation de $Z_{effm}$.

Plus généralement, pour obtenir une estimation de $Z_{effm}$, on établit une fonction $D\mu'$ représentative d'une comparaison entre des valeurs de $\mu'$ à des énergies différentes. Par comparaison, on entend notamment le calcul d'une différence ou d'un rapport entre deux grandeurs.

Une autre définition possible de $D\mu'$ est :

$$D\mu'(E_1) = \frac{\dfrac{d\mu'(E_1)}{dE_1}}{\mu'(E_1)} , \qquad (6')$$

où $\dfrac{d\mu'(E_1)}{dE_1}$ est la dérivée de la fonction par rapport à l'énergie.

Pour exploiter au mieux l'information disponible, contenue dans les mesures de spectres de diffusion, le procédé de l'invention exploite plusieurs modèles multiivariables reliant les inconnues ($\rho$, $Z_{effm}$) aux variables pouvant être obtenues directement à partir des mesures ($\mu'$, $D\mu'$).

Deux étapes sont nécessaires. La première, appelée étalonnage ou calibrage, correspond à la construction du modèle mathématique à partir de courbes d'étalonnage correspondant à des matériaux connus (tant les valeurs $\rho$, $Z_{effm}$ que les fonctions $\mu'$, $D\mu'$ sont alors connues). La deuxième étape, appelée prédiction, permet d'estimer la densité $\rho$ et/ou le nombre atomique effectif massique $Z_{effm}$ pour des matériaux inconnus à partir des courbes $\mu'$/$D\mu'$ obtenues à partir des spectres de diffusion mesurés et du modèle construit à l'étape d'étalonnage.

La méthode d'apprentissage utilisée peut être une régression par moindres carrés partiels (« PLS », de l'anglais « Partial Least Squares »), dont le principe sera rappelé ci-après. Plus précisément, dans un mode de réalisation préféré de l'invention, deux régressions PLS sont effectuées : une première pour estimer $\rho$ à partir d'une courbe d'atténuation et une seconde pour estimer $Z_{effm}$ à partir de $D\mu'(E_1)$.

La méthode PLS (Partial Least Square) fait partie des méthodes de prédiction dites par analyse factorielle ou analyse multivariée. L'analyse factorielle réalise une diminution du nombre des variables facilement mesurables $Y_{var}$ (ici, $\mu'$ et $D\mu'$) en un nombre réduit de combinaisons linéaires des $Y_{var}$, appelées facteurs, dans le but de concentrer l'information utile dans un espace de plus petite dimension et permettre ainsi une régularisation de l'inversion en réduisant le nombre d'inconnus. La méthode PLS se différencie des méthodes de type régression en composantes principales (PCR, de l'anglais « Principal Component Régression ») ou analyse en composantes principales (ACP ou PCA, de l'anglais « Principal Component Analysis ») en ce qu'elle prend en compte à la fois l'information sur les paramètres à estimer $X_{var}$ (ici, $\rho$ et $Z_{effm}$) et sur les $Y_{var}$ ($\mu'$ et $D\mu'$). La méthode PLS réalise donc une extraction des vecteurs propres à partir des matrices de paramètres **X** et des matrices de mesures **Y** des mélanges d'étalonnage alors que les méthodes comme la PCR font cette extraction uniquement à partir de la matrice des mesures Y.

Il existe plusieurs types de régression PLS. La plus simple, appelé PLS1, s'applique au cas où la matrice de paramètres est un simple vecteur que l'on indique par **x** (comme dans le cas présent, car $\rho$ et $Z_{effm}$ sont estimés séparément). Dans le cas où l'on recherche plusieurs paramètres en même temps, **X** correspond à une matrice et on utilise alors l'algorithme PLS2. La méthode PLS1 est décrite ci-après :

Pour chacun des K facteurs à inclure dans le modèle (K est à choisir par l'utilisateur, dans le cas présent on utilisera généralement un unique facteur), les étapes de l'algorithme d'étalonnage sont les suivantes:

- Initialisation : $Y_0 = Y$ et $x_0 = x$ avec :

  - **Y**: la matrice des mesures d'étalonnage de taille M par Ne avec M le nombre de matériaux « étalons » et Ne le nombre de canaux en énergie de la courbe de mesures (cette courbe de mesure correspond soit à $\mu'(E)$ dans le cas de l'estimation de $\rho$, soit $D\mu'(E)$ dans le cas de l'estimation de $Z_{effm}$) ;
  - **x** : le vecteur des variables utiles (soit $\rho$, soit $Z_{effm}$) de taille M (le nombre de matériaux étalons).

- Une composante de la matrice de changement de base, dite matrice des poids ou, en anglais, "loading vector", $w_k$ est calculée pour déterminer la composante de $Y_k$ la plus corrélée aux variations de $x_k$. L'objectif est de trouver un vecteur $w_k$ qui engendre un vecteur $t_k$ de covariance maximale avec $x_k$ :

$$\max_{w_k}\left[\operatorname{cov}(t_k, x_{k-1}) \quad \middle| \quad t_k = Y_{k-1}w_k \quad et \quad \|w_k\|^2 = 1\right]$$

$$= \max_{w_k}\left[x^T t = \sum_{i=1}^{M} x_i t_i \quad \middle| \quad t_i = \sum_{j=1}^{Ne} y_{ij} w_j \quad et \quad \|w\|^2 = 1\right]$$

Pour plus de lisibilité des équations les indices k et k-1 sont omis :

$$= \max_{w_k}\left[\sum_{i=1}^{M}\sum_{j=1}^{Ne} x_i y_{ij} w_j \quad \middle| \quad \|w\|^2 = 1\right]$$

$$= \max_{w_k}\left[ Y^T x w \quad \bigg| \quad \|w\|^2 = 1 \right]$$

Sous la contrainte que **w** soit unitaire, la valeur maximum de l'expression précédente est obtenue lorsque **w** est un vecteur unitaire colinéaire à $Y^Tx$ (« $^T$ » indique l'opérateur de transposition), soit :

$$w_k = \frac{Y_{k-1}^{\;T} x_{k-1}}{\left\| Y_{k-1}^{\;T} x_{k-1} \right\|}$$

- Le "score" est ensuite estimé en projetant $Y_{k-1}$ sur $w_k$ :

$$t_k = Y_{k-1} w_k$$

- Le vecteur de poids des mesures $v_k$ est déterminé par régression de $Y_{k-1}$ sur $t_k$ et celui des variables $q_k$ en régressant $x_{k-1}$ sur $t_k$ :

$$v_k = Y_{k-1}^{\;T} t_k (t_k^{\;T} t_k)^{-1} \quad \text{(solution de } \min_{v_k}\left\| Y_{k-1} - t_k v_k^T \right\|^2 \text{)}$$

$$q_k = x_{k-1}^{\;T} t_k (t_k^{\;T} t_k)^{-1} \quad \text{(solution de } \min_{q_k}\left\| x_{k-1} - t_k q_k^T \right\|^2 \text{)}$$

- Les résidus $Y_k$ et $x_k$ sont formées par déflation en enlevant les effets de ce facteur aux données (on retranche ainsi l'information déjà modélisée) :

$$Y_k = Y_{k-1} - t_k v_k^T$$

$$x_k = x_{k-1} - t_k q_k^T$$

- On reprend à la deuxième étape jusqu'à la détermination des K facteurs souhaités.

A la fin de l'étape d'étalonnage, on peut alors écrire **Y** et **x** sous la forme :

$$Y = \sum_{k=1}^{K} t_k v_k^T + R$$

$$x = \sum_{k=1}^{K} t_k q_k^T + f$$

avec **R** la matrice des résidus associée à la prédiction de **Y** et **f** le vecteur des résidus associé à la prédiction de **x**.
Une fois le modèle estimé, il est utilisé pour l'étape de prédiction. Lors de cette étape, le modèle et les nouvelles données **Y** sont utilisés afin de prédire les valeurs des variables $\rho$ ou $Z_{effm}$ à partir des données de prédiction. Ainsi, on extrait successivement de **Y** les informations correspondant à chaque facteur avec lesquelles on construit **x** ($\rho$ ou $Z_{effm}$). On procède donc de la manière suivante :

- Le vecteur *x* est initialement nul, k=0 ;
- Calcul du "score" : $t_k=Y_k w_k$ ;
- Calcul de la contribution de ce « score » sur *x* :

$$x_{k+1} = x_k + t_k q_k^T ;$$

- Calcul du résidu:

$$Y_{k+1} = Y_k - t_k v_k^T$$

- Incrément de k et itération jusqu'à k=K.

L'utilisation simultanée de l'information sur *x* et *Y* à l'étape d'étalonnage permet d'obtenir de meilleurs résultats de prédiction qu'avec la méthode PCR qui n'utilise que l'information sur *Y*. A la différence de l'analyse en composantes principales, l'algorithme PLS recherche l'espace des facteurs le plus conforme aux variables *x* et *Y*, sa prédiction est donc meilleure.

Ainsi, il est possible d'extraire deux paramètres caractéristiques d'un matériau - $\rho$ et $Z_{effm}$ - à partir d'une courbe d'atténuation combinée $\mu'(E)$ obtenue à partir de spectres de diffusion de rayons X. Le matériau peut donc être représenté par un point dans le plan $\rho/Z_{effm}$.

Ce matériau étant inconnu, l'objectif est alors de l'identifier en utilisant les valeurs de $\rho$ et de $Z_{effm}$ estimées par la méthode. Pour ce faire, il est possible d'utiliser un ensemble de matériaux étalons pour lesquels les valeurs de $\rho$ et de $Z_{effm}$ sont connues, afin de déterminer un critère permettant l'identification du matériau inconnu parmi cette base de matériaux. Le critère utilisé peut soit être un critère de distance dans le plan $\rho/Z_{effm}$ par rapport aux points étalons. Dans ce cas, le matériau sera identifié comme étant le même matériau que le matériau étalon avec lequel la distance estimée est la plus petite. Autrement, le critère utilisé peut être un critère probabiliste (les étalons font alors référence à des distributions de probabilités) et dans ce cas, le matériau sera identifié comme étant celui avec la probabilité la plus grande.

La figure 5 illustre de manière schématique les différentes étapes du procédé d'identification selon l'invention. Premièrement, des spectres $X(E_1)$ sont acquis à deux profondeurs ou plus ; ces spectres sont utilisés pour estimer les courbes d'atténuation combinée ; les courbes d'atténuation obtenues à partir de matériaux connus sont utilisées pour étalonner un premier modèle multivariable, puis celles obtenues à partir de matériaux inconnus sont utilisées pour prédire les densités $\rho$ desdits matériaux à l'aide dudit premier modèle. Ultérieurement ou en parallèle, les courbes d'atténuation combinée sont également utilisées pour estimer les fonctions $D\mu'(E_1)$. Les fonctions $D\mu'(E_1)$ obtenues à partir de matériaux connus sont utilisées pour étalonner un second modèle multivariable, puis celles obtenues à partir de matériaux inconnus sont utilisées pour prédire les nombres atomiques effectifs massiques $Z_{effm}$ desdits matériaux à l'aide dudit second modèle. Enfin, les matériaux inconnus sont représentés par des points dans le plan $\rho/Z_{effm}$, et il est procédé à leur identification. Ces opérations sont effectuées en utilisant un moyen de traitement de l'information.

On comprendra qu'il n'est pas toujours nécessaire de mettre en oeuvre toutes les étapes de la méthode ; par exemple, il peut être suffisant d'estimer la densité et/ou le nombre atomique effectif massique d'un matériau sans nécessairement vouloir l'identifier. Egalement, d'autres paramètres que $\rho$ et $Z_{effm}$ peuvent être estimés, en utilisant éventuellement d'autres fonctions issues des spectres de diffusion que $\mu'$ et $D\mu'$.

Le procédé de l'invention a été validé expérimentalement. L'appareil de la figure 1 a été utilisé pour analyser un bloc cubique de 0,5 dm$^3$ de polyfluorure de vinylidène, dont les caractéristiques sont les suivantes : $\rho$=1,79 g/cm$^3$ ; $Z_{effm}$=7,62. Ce matériau, connu, a été supposé inconnu aux fins de la validation de la méthode.

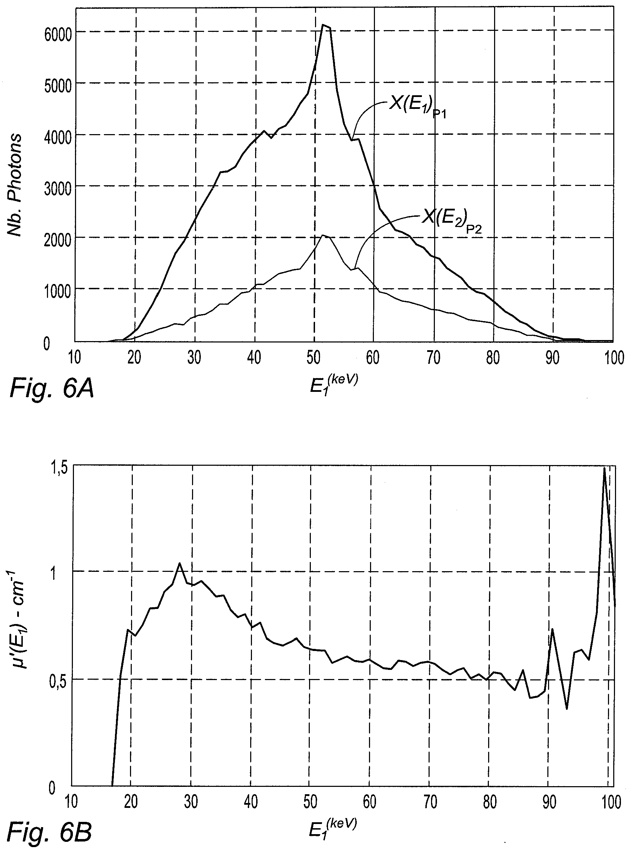

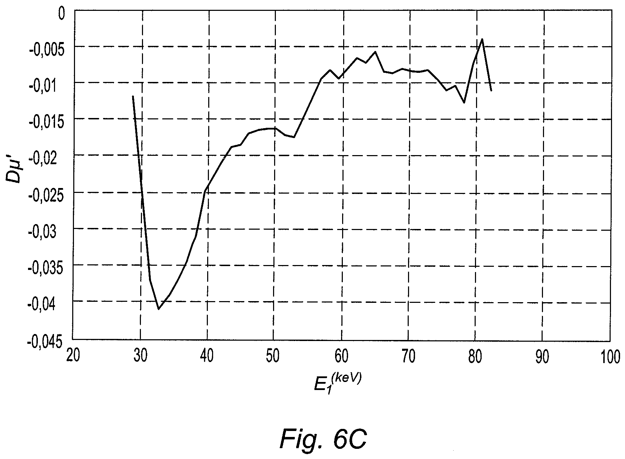

Il a donc été procédé à des mesures de spectres en rayonnement rétrodiffusé ($\theta$=120°) à deux profondeurs dans le matériau : $P_1$=15mm, $P_2$=30mm. Les spectres obtenus, $X(E_1)_{P1}$ et $X(E_1)_{P2}$ sont reproduits sur la figure 6A. La figure 6B montre la courbe d'atténuation combinée obtenue en appliquant l'équation (3) à ces spectres, dans la plage 18 - 100 keV. La figure 6C montre la courbe correspondante de la fonction $D\mu'$, définie conformément à l'équation 6'.

Dans un premier exemple, la base d'étalonnage utilisée pour construire les deux modèles inclut le matériau à identifier. La base d'étalonnage inclut ainsi le polyfluorure de vinylidène, le polyformaldéhyde, le polytétrafluoroéthylène, l'eau, le polyméthacrylate de méthyle et le nylon. Le modèle a été construit à partir des six courbes d'atténuation combinée correspondant à ces matériaux. La courbe du matériau « inconnu » (en fait, du polyfluorure de vinylidène) a ensuite été utilisée pour l'étape de prédiction. Les valeurs prédites pour la densité et le nombre atomique effectif massique sont :

$$\hat{\rho}=1{,}756 \text{ g/cm}^3$$

$$\hat{Z}_{effm}=7{,}439.$$

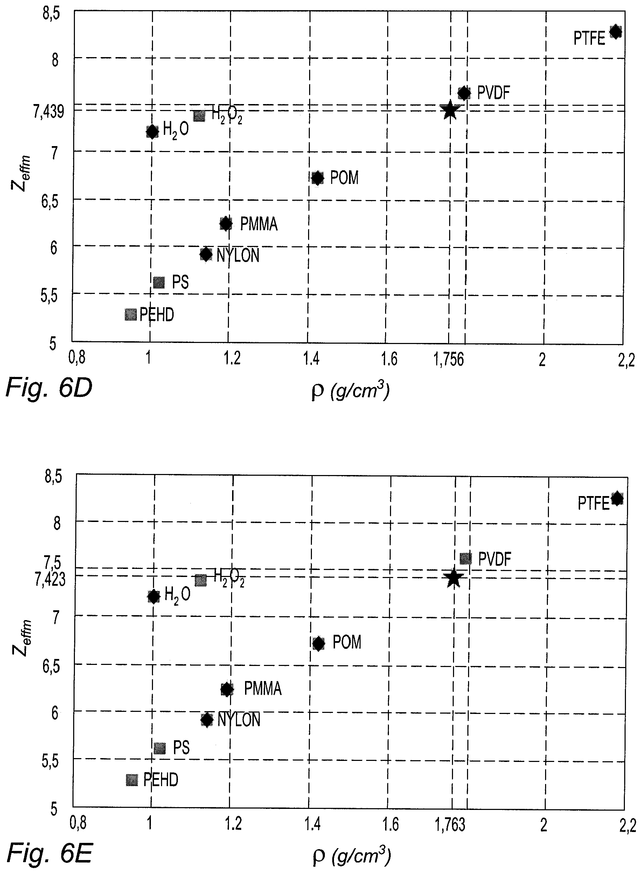

Ces valeurs constituent les coordonnées d'un point (représenté par une étoile dans la figure 6**D**) dans le plan $\rho/Z_{effm}$ ; d'autres matériaux de référence sont également représentés par des points dans ce plan (les carrés correspondent aux matériaux de la base de données d'identification ; les losanges, aux matériaux de la base de données de construction du modèle). Le matériau « inconnu » est reconnu comme étant du polyfluorure de vinylidiène par application d'un simple critère de distance minimale.

Dans un deuxième exemple, on a choisi d'exclure le polyfluorure de vinylidiène de la base d'étalonnage (en effet, en conditions réelles il est peu probable que le matériau inconnu fasse partie de cette base) ; les modèles ont donc été construit à partir de cinq courbes d'étalonnage correspondant au polyformaldéhyde, au polytétrafluoroéthylène, à l'eau, au polyméthacrylate de méthyle et au nylon.

Les valeurs prédites pour la densité et le nombre atomique effectif massique sont :

$$\hat{\rho}=1{,}763 \text{ g/cm}^3$$

$$\hat{Z}_{effm}=7{,}423.$$

L'estimation n'est donc pas dégradée de manière significative par rapport au cas précédent, où le matériau à caractériser fait partie de la base d'étalonnage. Comme le montre la figure 6E, l'identification du matériau est possible dans ce cas également.

## Revendications

**1.** Procédé de caractérisation d'un matériau comportant les étapes consistant à :

a. diriger un premier faisceau collimaté de rayonnement électromagnétique, d'énergie supérieure ou égale à 1keV (FIX), vers un échantillon (E) du matériau à caractériser ;
b. acquérir le spectre d'un deuxième faisceau de rayonnement électromagnétique, obtenu par diffusion dudit premier faisceau par un volume élémentaire ($\delta V$) dudit échantillon selon un angle de diffusion $\theta$ prédéfini ;

lesdites étapes a et b étant répétées une ou plusieurs fois, en modifiant à chaque fois les longueurs des trajets du premier et du deuxième faisceau à l'intérieur dudit matériau, tout en maintenant sensiblement constant leur rapport $\varepsilon$ ainsi que ledit angle de diffusion $\theta$ ; et

c. estimer plusieurs propriétés caractéristiques dudit matériau à partir des spectres acquis lors des répétitions de l'étape b ;

**caractérisé en ce que** ladite étape c est mise en oeuvre au moyen de deux modèles multivariables et comporte :

- le calcul, à partir des spectres acquis lors des répétitions de ladite étape b, d'une fonction d'atténuation linéique combinée $\mu'$ du matériau, définie comme une moyenne pondérée des coefficients d'atténuation linéiques $\mu$ du matériau pour le rayonnement électromagnétique incident à une énergie $E_0$ et pour le rayonnement électromagnétique diffusé à une énergie $E_1$, où $E_0$ représente l'énergie d'un photon incident et $E_1$ celle d'un photon ayant subi une diffusion selon ledit angle de diffusion $\theta$, les coefficients de pondération de ladite moyenne dépendant dudit rapport $\varepsilon$, ladite atténuation linéique combinée étant exprimée en fonction d'une énergie choisie parmi $E_0$ et $E_1$,
- l'estimation de la densité dudit matériau à partir des valeurs de ladite fonction d'atténuation linéique combinée pour une pluralité de valeurs d'énergie, par application d'un premier modèle multivariable,
- la détermination d'une fonction $D\mu'$ représentative d'une comparaison entre des valeurs prises par ladite fonction d'atténuation linéique combinée $\mu$' pour des valeurs d'énergie présentant un écart dE constant,
- l'estimation d'un nombre atomique effectif massique dudit matériau à partir des valeurs de ladite fonction $D\mu$' pour une pluralité de valeurs d'énergie, par application d'un second modèle multivariable.

2. Procédé selon la revendication 1 , comportant également une étape d'identification dudit matériau à partir des valeurs estimées de sa densité et de son nombre atomique effectif massique.

3. Procédé selon l'une des revendications précédentes dans lequel les modèles multivariables sont basés sur une régression par moindres carrés partiels, ou PLS.

4. Procédé selon l'une des revendications précédentes dans lequel lesdites étapes a et b sont répétées une ou plusieurs fois, en modifiant à chaque fois la profondeur dudit volume élémentaire de l'échantillon par rapport à une surface d'incidence dudit faisceau collimaté de rayonnement électromagnétique.

5. Procédé selon la revendication 4 dans lequel ladite profondeur dudit volume élémentaire de l'échantillon est modifiée par translation rigide d'une source et d'un capteur spectrométrique de rayonnement électromagnétique par rapport audit échantillon, dans une direction perpendiculaire à ladite surface d'incidence.

6. Procédé selon l'une des revendications précédentes, dans lequel ledit matériau est un matériau organique.

7. Procédé selon l'une des revendications précédentes, dans lequel ledit premier faisceau collimaté de rayonnement électromagnétique est polychromatique et présente un spectre d'énergie s'étendant sur au moins 10 keV dans une région comprise entre 10 keV et 300 keV.

8. Appareil de caractérisation d'un matériau comportant :

- une source collimatée de rayonnement électromagnétique d'énergie supérieure ou égale à 1keV (SX), agencée pour diriger un premier faisceau collimaté de rayonnement électromagnétique (FIX) vers un échantillon du matériau à caractériser ;
- un capteur spectrométrique de rayonnement électromagnétique (CX), agencé pour acquérir le spectre d'un deuxième faisceau de rayonnement électromagnétique, obtenu par diffusion dudit premier faisceau par un volume élémentaire dudit échantillon selon un angle de diffusion prédéfini ;
- un système d'actionnement (A), agencé pour modifier la position relative de ladite source et dudit capteur spectrométrique par rapport audit échantillon de manière à modifier les longueurs des trajets du premier et du deuxième faisceau à l'intérieur dudit matériau, tout en maintenant sensiblement constant leur rapport $\varepsilon$ ainsi que ledit angle de diffusion $\theta$ ; et
- un moyen de traitement de l'information (MTI), configuré ou programmé pour estimer une ou plusieurs propriétés caractéristiques dudit matériau à partir d'une pluralité de spectres acquis par ledit capteur spectrométrique pour différentes valeurs desdites longueurs des trajets du premier et du deuxième faisceau à l'intérieur dudit matériau ;

**caractérisé en ce que** ledit moyen de traitement de l'information est configuré ou programmé pour :

estimer plusieurs propriétés caractéristiques dudit matériau au moyen de deux modèles multivariables ;
calculer, à partir des spectres acquis lors des répétitions de ladite étape (b), une fonction d'atténuation linéique combinée $\mu$' du matériau, définie comme une moyenne pondérée des coefficients d'atténuation linéiques $\mu$ du matériau pour le rayonnement électromagnétique incident à une énergie $E_0$ et pour le rayonnement électromagnétique diffusé à une énergie $E_1$, où $E_0$ représente l'énergie d'un photon incident et $E_1$ celle d'un photon ayant subi une diffusion selon ledit angle de diffusion $\theta$, les coefficients de pondération de ladite moyenne dépendant dudit rapport $\varepsilon$, ladite atténuation linéique combinée étant exprimée en fonction d'une énergie choisie parmi $E_0$ et $E_1$,
estimer la densité dudit matériau à partir des valeurs de ladite fonction d'atténuation linéique combinée pour une pluralité de valeurs d'énergie, par application d'un premier modèle multivariable,
déterminer une fonction $D\mu$' représentative d'une comparaison entre des valeurs prises par ladite fonction d'atténuation linéique combinée $\mu$' pour des valeurs d'énergie présentant un écart dE constant ; et
estimer un nombre atomique effectif massique dudit matériau à partir des valeurs de ladite fonction $D\mu$' pour une pluralité de valeurs d'énergie, par application d'un second modèle multivariable.

9. Appareil selon la revendication 8 , dans lequel ledit moyen de traitement de l'information est configuré ou programmé pour identifier ledit matériau à partir des valeurs estimées de sa densité et de son nombre atomique effectif massique.

10. Appareil selon l'une des revendications 8 ou 9 , dans lequel les modèles multivariables sont basés sur une régression par moindres carrés partiels, ou PLS.

11. Appareil selon l'une des revendications 8 à 10, dans lequel ledit système d'actionnement est adapté pour modifier la profondeur dudit volume élémentaire de l'échantillon par rapport à une surface d'incidence dudit faisceau collimaté de rayonnement électromagnétique en translatant rigidement ladite source et ledit capteur spectrométrique par rapport audit échantillon, dans une direction perpendiculaire à ladite surface d'incidence.

12. Appareil selon l'une des revendications 8 à 11 , dans lequel ladite source collimatée de rayonnement électromagnétique est polychromatique et présente un spectre d'énergie s'étendant sur au moins 10 keV dans une région comprise entre 10 keV et 300 keV.

## Patentansprüche

1. Verfahren zur Charakterisierung eines Materials, umfassend die Schritte, die bestehen im:

a. Lenken eines ersten kollimierten Bündels elektromagnetischer Strahlung mit einer Energie von größer oder gleich 1 keV (FIX) in Richtung einer Probe (E) des Materials, das charakterisiert werden soll;
b. Erfassen des Spektrums eines zweiten Bündels elektromagnetischer Strahlung, das durch Streuung des ersten Bündels durch ein Elementarvolumen ($\delta$V) der Probe gemäß einem vordefinierten Streuwinkel $\theta$ erhalten wird;

wobei die Schritte a und b ein oder mehrere Male wiederholt werden, wobei bei jedem Mal die Längen der Strecken des ersten und des zweiten Bündels im Inneren des Materials modifiziert werden, während gleichzeitig ihr Verhältnis $\epsilon$ sowie der Streuwinkel $\theta$ im Wesentlichen konstant gehalten werden; und

c. Schätzen mehrerer charakteristischer Eigenschaften des Materials anhand der Spektren, die bei den Wiederholungen des Schritts b erfasst werden;

**dadurch gekennzeichnet, dass** der Schritt c mittels zweier multivariabler Modelle umgesetzt wird und umfasst:

- das Berechnen, anhand der bei den Wiederholungen des Schritts b erfassten Spektren, einer kombinierten linearen Dämpfungsfunktion $\mu$' des Materials, die als ein gewichtetes Mittel der linearen Dämpfungskoeffizienten $\mu$ des Materials definiert ist, für die elektromagnetische Strahlung, die mit einer Energie $E_0$ einfällt, und für die elektromagnetische Strahlung, die mit einer Energie $E_1$ gestreut wird, wobei $E_0$ die Energie eines einfallenden Photons repräsentiert, und $E_1$ diejenige eines Photons, das eine Streuung gemäß dem Streuwinkel $\theta$ erfahren hat, wobei die Gewichtungskoeffizienten des Mittels vom Verhältnis $\epsilon$ abhängen, wobei die kombinierte lineare Dämpfung als Funktion einer Energie ausgedrückt wird, ausgewählt aus $E_0$ und $E_1$,
- das Schätzen der Dichte des Materials anhand der Werte der kombinierten linearen Dämpfungsfunktion für eine Vielzahl von Energiewerten durch Anwenden eines ersten multivariablen Modells,
- das Bestimmen einer Funktion D$\mu$', die für einen Vergleich zwischen Werten repräsentativ ist, die von der kombinierten linearen Dämpfungsfunktion $\mu$' genommen werden, für Energiewerte, die einen konstanten Abstand dE aufweisen,
- das Schätzen einer effektiven Atommassenzahl des Materials anhand der Werte der Funktion D$\mu$' für eine Vielzahl von Energiewerten durch Anwenden eines zweiten multivariablen Modells.

2. Verfahren nach Anspruch 1, das ebenfalls einen Schritt des Identifizierens des Materials anhand der Schätzwerte seiner Dichte und seiner effektiven Atommassenzahl umfasst.

3. Verfahren nach einem der vorstehenden Ansprüche, wobei die multivariablen Modelle auf einer Regression mit partiellen kleinsten Quadraten, oder PLS, basieren.

4. Verfahren nach einem der vorstehenden Ansprüche, wobei die Schritte a und b ein oder mehrere Male wiederholt werden, wobei bei jedem Mal die Tiefe des Elementarvolumens der Probe in Bezug auf eine Einfallsfläche des kollimierten Bündels elektromagnetischer Strahlung modifiziert wird.

5. Verfahren nach Anspruch 4, wobei die Tiefe des Elementarvolumens der Probe durch starre Translation einer Quelle und eines Spektrometriesensors für elektromagnetische Strahlung in Bezug auf die Probe in eine Richtung senkrecht zur Einfallsfläche modifiziert wird.

6. Verfahren nach einem der vorstehenden Ansprüche, wobei das Material ein organisches Material ist.

7. Verfahren nach einem der vorstehenden Ansprüche, wobei das erste kollimierte Bündel elektromagnetischer Strahlung polychromatisch ist und ein Energiespektrum aufweist, das sich in einem Bereich zwischen 10 keV und 300 keV über mindestens 10 keV erstreckt.

8. Einrichtung zur Charakterisierung eines Materials, umfassend:

   - eine kollimierte Quelle von elektromagnetischer Strahlung mit einer Energie von größer oder gleich 1 keV (SX), die dafür eingerichtet ist, ein erstes kollimiertes Bündel elektromagnetischer Strahlung (FIX) in Richtung einer Probe des Materials zu lenken, das charakterisiert werden soll;
   - einen Spektrometriesensor für elektromagnetische Strahlung (CX), der dafür eingerichtet ist, das Spektrum eines zweiten Bündels elektromagnetischer Strahlung zu erfassen, das durch Streuung des ersten Bündels durch ein Elementarvolumen der Probe gemäß einem vordefinierten Streuwinkel erhalten wird;
   - ein Betätigungssystem (A), das dafür eingerichtet ist, die relative Position der Quelle und des Spektrometriesensors in Bezug auf die Probe zu modifizieren, um die Längen der Strecken des ersten und des zweiten Bündels im Inneren des Materials zu modifizieren, während gleichzeitig ihr Verhältnis $\varepsilon$ sowie der Streuwinkel $\theta$ im Wesentlichen konstant gehalten werden; und
   - ein Mittel zum Verarbeiten der Informationen (MTI), das dafür konfiguriert oder programmiert ist, eine oder mehrere charakteristische Eigenschaften des Materials anhand einer Vielzahl von Spektren zu schätzen, die vom Spektrometriesensor für verschiedene Werte der Längen der Strecken des ersten und des zweiten Bündels im Inneren des Materials erfasst werden;

   **dadurch gekennzeichnet, dass** das Mittel zum Verarbeiten der Informationen dafür konfiguriert oder programmiert ist:

   mehrere charakteristische Eigenschaften des Materials mittels zweier multivariabler Modelle zu schätzen;
   anhand der bei den Wiederholungen des Schritts (b) erfassten Spektren eine kombinierte lineare Dämpfungsfunktion $\mu'$ des Materials, die als ein gewichtetes Mittel der linearen Dämpfungskoeffizienten $\mu$ des Materials definiert ist, für die elektromagnetische Strahlung, die mit einer Energie $E_0$ einfällt, und für die elektromagnetische Strahlung, die mit einer Energie $E_1$ gestreut wird, zu berechnen, wobei $E_0$ die Energie eines einfallenden Photons repräsentiert, und $E_1$ diejenige eines Photons, das eine Streuung gemäß dem Streuwinkel $\theta$ erfahren hat, wobei die Gewichtungskoeffizienten des Mittels vom Verhältnis $\varepsilon$ abhängen, wobei die kombinierte lineare Dämpfung als Funktion einer Energie ausgedrückt wird, ausgewählt aus $E_0$ und $E_1$,
   die Dichte des Materials anhand der Werte der kombinierten linearen Dämpfungsfunktion für eine Vielzahl von Energiewerten durch Anwenden eines ersten multivariablen Modells zu schätzen,
   eine Funktion $D\mu'$, die für einen Vergleich zwischen Werten repräsentativ ist, die von der kombinierten linearen Dämpfungsfunktion $\mu'$ genommen wurden, für Energiewerte zu bestimmen, die einen konstanten Abstand dE aufweisen; und
   eine effektive Atommassenzahl des Materials anhand der Werte der Funktion $D\mu'$ für eine Vielzahl von Energiewerten durch Anwenden eines zweiten multivariablen Modells zu schätzen.

9. Einrichtung nach Anspruch 8, wobei das Mittel zum Verarbeiten der Informationen dafür konfiguriert oder programmiert ist, das Material anhand der Schätzwerte seiner Dichte und seiner effektiven Atommassenzahl zu identifizieren.

10. Einrichtung nach einem der Ansprüche 8 oder 9, wobei die multivariablen Modelle auf einer Regression mit partiellen kleinsten Quadraten, oder PLS, basieren.

11. Einrichtung nach einem der Ansprüche 8 bis 10, wobei das Betätigungssystem dafür angepasst ist, die Tiefe des Elementarvolumens der Probe in Bezug auf eine Einfallsfläche des kollimierten Bündels elektromagnetischer Strahlung durch starres Translatieren der Quelle und des Spektrometriesensors in Bezug auf die Probe in eine Richtung senkrecht zur Einfallsfläche zu modifizieren.

12. Einrichtung nach einem der Ansprüche 8 bis 11, wobei die kollimierte Quelle elektromagnetischer Strahlung polychromatisch ist und ein Energiespektrum aufweist, das sich in einem Bereich zwischen 10keV und 300 keV über mindestens 10 keV erstreckt.

**Claims**

1. Method for characterising a material comprising steps consisting of:

   a. directing a first electromagnetic radiation collimated beam, of energy greater than or equal to 1keV (FIX), towards a sample (E) of the material to be characterised;
   b. acquiring the spectrum of a second electromagnetic radiation beam, obtained by diffusion of said first beam by an elementary volume ($\delta V$) of said sample according to a predefined diffusing angle $\theta$;

   said steps a and b being repeated one or several times, by each time modifying the lengths of the paths of the first and of the second beam inside said material, while keeping substantially constant their ratio $\varepsilon$ as well as said diffusing angle $\theta$; and

   c. estimating several properties, characteristic of said material from the spectrums acquired during the repetitions of step b;

   **characterised in that** said step c is implemented by means of two multivariable models and comprises:

   - the calculation, from the spectrums acquired during the repetitions of said step b, of a combined linear attenuation function $\mu'$ of the material, defined as a weighted average of the linear attenuation coefficients $\mu$ of the material for the incident electromagnetic radiation with an energy $E_0$ and for the diffused electromagnetic radiation with an energy $E_1$, where $E_0$ represents the energy of an incident photon and $E_1$ that of a photon having been subjected to a diffusion according to said diffusing angle $\theta$, the weighting coefficients of said dependent average of said ratio $\varepsilon$, said combined linear attenuation being expressed according to an energy selected from among $E_0$ and $E_1$,
   - the estimation of the density of said material from the values of said combined linear attenuation function for a plurality of energy values, by application of a first multivariable model,
   - the determination of a function $D\mu'$ representative of a comparison between the values taken by said combined linear attenuation function $\mu'$ for energy values having a constant difference dE,
   - the estimation of an actual atomic number by weight of said material from the values of said function $D\mu'$ for a plurality of energy values, by application of a second multivariable model.

2. Method according to claim 1, also comprising a step of identifying said material from the estimated values of its density and its actual atomic number by weight.

3. Method according to one of the preceding claims, wherein the multivariable models are based on a regression by partial least squares, or PLS.

4. Method according to one of the preceding claims, wherein said steps a and b are repeated one or several times, each time by modifying the depth of said elementary volume of the sample with respect to an incident surface of said electromagnetic radiation collimated beam.

5. Method according to claim 4, wherein said depth of said elementary volume of the sample is modified by rigid translation of a source and of an electromagnetic radiation spectrometric sensor with respect to said sample, in a direction perpendicular to said incident surface.

6. Method according to one of the preceding claims, wherein said material is an organic material.

7. Method according to one of the preceding claims, wherein said first electromagnetic radiation collimated beam is polychromatic and has an energy spectrum extending over at least 10 keV in a region comprised between 10 keV and 300 keV.

8. Device for characterising a material comprising:

- an electromagnetic radiation collimated source of energy greater than or equal to 1 keV (SX), arranged to direct a first electromagnetic radiation collimated beam (FIX) towards a sample of the material to be characterised;
- an electromagnetic radiation spectrometric sensor (CIX) arranged to acquire the spectrum of a second electromagnetic radiation beam, obtained by diffusion of said first beam by an elementary volume of said sample according to a predefined diffusing angle;
- an actuation system (A), arranged to modify the relative position of said source and of said spectrometric sensor with respect to said sample so as to modify the lengths of the paths of the first and of the second beam inside said material, while keeping substantially constant their ratio $\varepsilon$ as well as said diffusing angle $\theta$; and
- a means for processing information (MTI), configured or programmed to estimate one or several properties, characteristic of said material from a plurality of spectrums acquired by said spectrometric sensor for different values of said lengths of paths of the first and of the second beam inside said material;

**characterised in that** said means for processing information is configured or programmed to:

estimate several properties, characteristic of said material by means of two multivariable models;

calculate, from the spectrums acquired during the repetitions of said step (b), a combined linear attenuation function $\mu'$ of the material, defined as a weighted average of the linear attenuation coefficients $\mu$ of the material for the incident electromagnetic radiation with an energy $E_0$ and for the electromagnetic radiation diffused with an energy $E_1$, where $E_0$ represents the energy of an incident photon and $E_1$ that of a photon having been subjected to a diffusion according to said diffusing angle $\theta$, the weighting coefficients of said average dependent on said ratio $\varepsilon$, said combined linear attenuation being expressed according to an energy selected from among $E_0$ and $E_1$,

estimate the density of said material from the values of said combined linear attenuation function for a plurality of energy values, by application of a first multivariable model,

determine a function $D\mu'$ representative of a comparison between values taken by said combined linear attenuation function $\mu'$ for energy values having a constant difference dE; and

estimate an actual atomic number by weight of said material from the values of said function $D\mu'$ for a plurality of energy values, by application of a second multivariable model.

9. Device according to claim 8, wherein said means for processing information is configured or programmed to identify said material from the estimated values of its density and of its actual atomic number by weight.

10. Device according to one of claims 8 or 9, wherein the multivariable models are based on a regression by partial least squares, or PLS.

11. Device according to one of claims 8 to 10, wherein said actuation system is suitable for modifying the depth of said elementary volume of the sample with respect to an incident surface of said electromagnetic radiation collimated beam by rigidly translating said source and said spectrometric sensor with respect to said sample, in a direction, perpendicular to said incident surface.

12. Device according to one of claims 8 to 11, wherein said electromagnetic radiation collimated source is polychromatic and has an energy spectrum extending over at least 10 keV in a region comprised between 10 keV and 300 keV.

Fig. 1

Fig. 5

Fig. 2

Fig. 3

Fig. 4A

Fig. 4B

Fig. 6A

Fig. 6B

Fig. 6D

Fig. 6E

*Fig. 6C*

# EP 2 769 209 B1

## RÉFÉRENCES CITÉES DANS LA DESCRIPTION

**Documents brevets cités dans la description**

- WO 2011009833 A